# EUROPÄISCHE PATENTSCHRIFT

(11) **EP 1 940 645 B1**
(45) Veröffentlichungstag und Bekanntmachung des Hinweises auf die Patenterteilung: **03.08.2011**
(21) Anmeldenummer: 06805380.0
(22) Anmeldetag: 10.10.2006
(51) Int. Cl.: B60L 11/18, H02J 7/00

(54) **ANTRIEBSSYSTEM FÜR EIN KRAFTFAHRZEUG**
DRIVE SYSTEM FOR A MOTOR VEHICLE
SYSTEME D'ENTRAINEMENT POUR UN VEHICULE

(30) Priorität: 28.10.2005 DE 102005052864; 06.12.2005 DE 102005058064
(43) Veröffentlichungstag der Anmeldung: 09.07.2008
(73) Patentinhaber: TEMIC Automotive Electric Motors GmbH, 10553 Berlin (DE)
(72) Erfinder: BIRKE, Peter, 16548 Glienicke/Nordbahn (DE); KELLER, Michael, 76534 Baden-Baden (DE)
(86) Internationale Anmeldenummer: PCT/DE2006/001762
(87) Internationale Veröffentlichungsnummer: WO 2007/048373

(56) Entgegenhaltungen:
- EP-A- 1 375 241
- US-A1- 2004 135 544
- US-B1- 6 184 656
- ELIAS M F M ET AL: "Lithium-ion battery charger for high energy application" POWER ENGINEERING CONFERENCE, 2003. PECON 2003. PROCEEDINGS. NATIONAL BANGI, MALAYSIA 15-16 DEC. 2003, PISCATAWAY, NJ, USA,IEEE, 15. Dezember 2003 (2003-12-15), Seiten 283-288, XP010802318 ISBN: 0-7803-8208-0
- MILLER J M ET AL: "An assessment of ultra-capacitors as the power cache in Toyota THS-II, GM-Allision AHS-2 and Ford FHS hybrid propulsion systems" APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, 6. März 2005 (2005-03-06), Seiten 481-490Vol1, XP010809423 ISBN: 0-7803-8975-1

## Beschreibung

Die vorliegende Erfindung betrifft ein Antriebssystem für ein Kraftfahrzeug, insbesondere ein Kraftfahrzeug mit Hybridantrieb.

Als Hybridantrieb bezeichnet man die Kombination verschiedener Antriebsprinzipien oder verschiedener Energiequellen für eine Antriebsaufgabe innerhalb einer Anwendung. Kraftfahrzeuge mit Hybridantrieb, auch Hybridfahrzeuge genannt, weisen beispielsweise eine Verbrennungsmaschine und eine elektrische Maschine auf. Die elektrische Maschine ist in der Regel als Starter-Generator und/oder elektrischer Antrieb ausgeführt. Als Starter-Generator ersetzt sie den normalerweise vorhandenen Anlasser und die Lichtmaschine. Bei einer Ausführung als elektrischer Antrieb kann ein zusätzliches Drehmoment, d. h. ein Beschleunigungsmoment, zum Vorantrieb des Fahrzeugs von der elektrischen Maschine beigetragen werden. Als Generator ermöglicht sie eine Rekuperation von Bremsenergie. Weiterhin weisen Hybridfahrzeuge mindestens einen Energiespeicher auf. Die Energie aus dem Energiespeicher kann zum Starten des Verbrennungsmotors, für die elektrischen Verbraucher im Fahrzeug und für Beschleunigungsvorgänge genutzt werden. Der Energiespeicher wird während der Fahrt über den Generator vom Verbrennungsmotor gespeist. Zusätzlich wird der Energiespeicher durch Energierückgewinnung beim Bremsen aufgeladen. Über eine Steuerelektronik werden die verschiedenen Modi gesteuert, unter anderem, ob dem Energiespeicher Energie entnommen oder zugeführt werden soll.

Aus der EP 0 913 287 A2 ist ein Hybridfahrzeug bekannt, welches eine Maschine zum Vorantreiben des Hybridfahrzeugs aufweist. Die Maschine hat eine Ausgangswelle, ein Kraftübertragungsmittel zum Übertragen einer Ausgangsleistung der Maschine von deren Ausgangswelle auf Antriebsräder sowie einen Elektromotor zum Zuführen einer Unterstützungsausgangsleistung zum Unterstützen der Ausgangsleistung der Maschine durch das Kraftübertragungsmittel zu den Antriebsrädern. Außerdem ist ein Stromenergiespeichermittel zum Speichern elektrischer Energie und zum Erregen des Elektromotors und ein Fahrzeugbetriebssteuermittel zum Steuern/Regeln des Betriebs des Hybridfahrzeugs mit der Maschine und dem Elektromotor vorgesehen. Das Fahrzeugbetriebssteuermittel umfasst ein Mittel zur Steuerung/Regelung des Elektromotors zum Erzeugen der Unterstützungsausgangsleistung, um das Hybridfahrzeug mit der elektrischen Energie anfahren zu können, die von dem Stromenergiespeichermittel dem Elektromotor zugeführt wird, während die Maschine leer läuft, wenn die in dem Stromenergiespeichermittel gespeicherte elektrische Energiemenge größer als ein vorbestimmter Wert ist. Schließlich sind Mittel zum Steuern/Regeln der Maschine vorhanden, um zu bewirken, dass die Ausgangswelle eine Ausgangsleistung zum Anfahren des Hybridfahrzeugs erzeugt, während der Elektromotor erregt ist, wenn die in dem Stromenergiespeichermittel gespeicherte elektrische Energiemenge kleiner als der vorbestimmte Wert ist.

Die US 2004/13 55 44 A1 zeigt ein Antriebsystem welches ein Symmetrieren von Energiespeichern während der Fahrt vorsieht.

Die EP 1 375 241 A1 zeigt eine Steuervorrichtung welche den Geschwindigkeitsbereich, in dem ein Fahrzeug nur mit einem Elektromotor angetrieben wird, abhängig vom Ladungszustand eines Energiespeichers verändert wird.

Die US 6 184 656 B1 zeigt ein Energiemanagementsystem für Elektrofahrzeuge, wobei eine Datenübertragung zwischen Überwachungsgeräten für den Ladungszustand und einer zentralen Kontrolleinheit drahtlos durchführbar ist.

Der Konferenzbericht "Lithium-ion battery charger for high energy application" von der PECON 2003 von Elias, M.F.M. et A1. beschreibt Mikrocontroler basierte Ladegeräte zur Aufladung von Energiespeichern mit Lithium-Ionen Zellen, wobei auch ein Symmetrieren diskutiert wird.

Aufgabe der Erfindung ist es, in vorteilhafter Weise ein Antriebssystem für ein Kraftfahrzeug nach dem Stand der Technik weiter zu bilden.

Diese Aufgabe wird durch die Merkmale der Patentansprüche 1 und 7 gelöst. Vorteilhafte Ausgestaltungen der Erfindung ergeben sich anhand der abhängigen Ansprüche und der weiteren Beschreibung.

Das erfindungsgemäße Antriebssystem weist eine Verbrennungsmaschine und eine elektrische Maschine auf, welche unter anderem auch als Starter-Generator einsetzbar ist. Bei der elektrischen Maschine handelt es sich um eine elektrische Drehfeldmaschine, welche die Starter-Generator-Funktion ausübt und wenigstens einen Wechselrichter zur Erzeugung der für die magnetischen Felder der elektrischen Maschine benötigten Spannungen und/oder Ströme variabler Frequenz, Amplitude und/oder Phase aufweist, wobei insbesondere die elektrische Maschine auch den Verbrennungsmotor im Zusammenlauf aus dem Stand startet.

Elektrische Maschine im Sinne der Anmeldung ist jede Art von Maschine für Rotationsbewegungen, die sowohl als elektrischer Motor wie auch als elektrischer Generator betrieben werden kann.

Der Wechselrichter kann für die magnetischen Felder benötigte Spannungen und/oder Ströme frei wählbarer Frequenz, Amplitude und/oder Phase erzeugen.

Das Hybridfahrzeug weist diverse Zustände bzw. Betriebsmodi auf, welche im Weiteren näher beschrieben werden.

Da bei herkömmlichen Kraftfahrzeugen, in welche ein Hybridantrieb eingebaut werden soll, zumeist nur ein Bordspannungsnetz für die elektrische Versorgung mit 12 Volt vorhanden ist, jedoch ein Energiespeicher eine weit höhere Spannung aufweist bzw. benötigt, beispielsweise 240 Volt, ist mindestens ein Hoch- und mindestens ein Niederspannungsbordnetz vorhanden. Um eine Umsetzung zwischen dem Hochspannungsnetz und dem Niederspannungsnetz zu erreichen, sind Zwischenkreiswechselrichter vorgesehen, welche für die Zwecke des Herauf- und Herabsetzens der Spannung zwischen den Spannungsnetzen notwendig sind. Nur durch diese Zwischenkreiswechselrichter können Energien von einem Bordspannungsnetz in das andere übergeleitet werden. Es kann somit aus dem Niederspannungsbordnetz in das Hochspannungsbordnetz und aus dem Hochspannungsbordnetz in das Niederspannungsbordnetz Energie abgegeben werden.

Im Weiteren ist vorgesehen, dass die elektrische Maschine mittels eines Wechselrichters derart ausgebildet ist, dass diese in der Lage ist, 220 Volt Wechselstrom oder 380 Volt Drehstrom mit üblicher Netzfrequenz, beispielsweise 50 oder 60 Hertz, zu liefern. Die Versorgung des Wechselrichters kann aus einem Gleichspannungszwischenkreis erfolgen. Ein so ausgestattetes Kraftfahrzeug erlaubt die Versorgung normaler elektrischer Netzgeräte und stellt damit einen fahrbaren Netzstromgenerator dar, der z. B. vorteilhaft bei Außenarbeiten oder beim Camping einsetzbar ist.

Die Umwandlung elektrischer Energie aus dem Zwischenkreis in Wechselstrom kann in vorteilhafter Weise auch der Versorgung eines Wechselspannungsbordnetzes des Fahrzeuges dienen. Ein solches Wechselspannungsbordnetz hat den Vorteil, dass aus der Bordnetzspannung durch Transformatoren bei den einzelnen Verbrauchern beliebige, an den jeweiligen Verbraucher angepasste, Spannungen erzeugt werden können. Im Gegenzug ist es aber auch möglich, den Energiespeicher über eine normale Netzversorgung an die 220 Volt-Steckdose, welche üblicherweise vorhanden ist, oder aber auch über eine Drehstrornversorgung mit Energie aufzuladen. Dies ist insbesondere von Vorteil, da dann das Kraftfahrzeug, wenn es nicht in Betrieb ist, bzw. dessen Energiespeicher, über das Energieversorgungsnetz eines Haushalts aufgeladen werden kann.

Eine im Kraftfahrzeug angeordnete Start/Stopp-Steuerung veranlasst vorzugsweise ein automatisches Stoppen des Verbrennungsmotors, wenn eine Stoppbedingung erfüllt ist. Zur Definition als Stoppbedingung können verschiedene Bedingungen allein oder in Unter-Kombination dienen, wie beispielsweise Null-Last, Schiebebetrieb, Leerlauf, Stillstand des Fahrzeuges, Verbrennungsmotor ist ausgekuppelt, kein Gang ist eingelegt, die Betriebs- oder Feststellbremse ist betätigt, Betätigung eines Stoppschalters.

In Fällen, wie insbesondere der Betätigung des Gaspedals, Lösen der Betriebs- oder Feststellbremse, Betätigung der Kupplung, Berührung oder Bewegung eines Gangschalterhebels, Einlegen eines Ganges, Betätigen eines Startschalters, wird automatisch über die Startsteuerung der Vortrieb des Wagens betrieben. In Abhängigkeit der auf das Gaspedal ausgeübten Kraft wird über die Steuer- und Regeleinheit, welche insbesondere in einer Steuerungsanordnung zur Steuerung der Zustände des Fahrzeuges integriert ist, der Beschleunigungsvorgang des Fahrzeug entsprechend dem Stand des Gaspedals betrieben.

Das Kraftfahrzeug mit Hybridantrieb kann alleinig mit dem Verbrennungsmotor beschleunigt werden. Zugleich kann über den Verbrennungsmotor im Schubbetrieb das Fahrzeug abgebremst werden.

Es besteht aber auch die Möglichkeit, das Fahrzeug alleinig mit der elektrischen Maschine zu beschleunigen. Hierzu wird die elektrische Maschine entsprechend der gewünschten Leistung bestromt. Das Fahrzeug setzt sich dann alleinig betrieben durch die elektrische Maschine in Bewegung.

Es besteht auch die Möglichkeit, eine Beschleunigung des Fahrzeuges in Kombination zwischen dem Verbrennungsmotor und der elektrischen Maschine zu betreiben. Insbesondere im so genannten Boost-Betrieb wird die elektrische Maschine zusätzlich und parallel zur der Verbrennungsmaschine zugeschaltet. Es ergibt sich dadurch eine besonders gute Beschleunigung des Fahrzeuges.

Im Weiteren besteht ein Bestriebsmodus des Kraftfahrzeuges darin, dass ein gleichmäßiges Fahren alleinig mit Betrieb der elektrischen Maschine und/oder mit Betrieb des Verbrennungsmotors ermöglicht wird. Im Fall, dass ein gleichmäßiges Fahren mit dem Verbrennungsmotor erfolgt, kann zugleich die elektrische Maschine als Generator betrieben werden und die dadurch gewonnene elektrische Energie wird in die unterschiedlichen Bordnetze im Fahrzeug übertragen und dort in die jeweiligen Energiespeicher gespeist.

Insbesondere beim Rekuperieren, d. h. in dem Fall, in welchem die elektrische Maschine als Generator zur Stromerzeugung dient, kommen die besonderen Vorzüge des Hybridantriebes zum Einsatz. Das Fahrzeug wird in der Rekuperationsphase nicht mehr über die Bremse abgebremst, sondern die elektrische Maschine wirkt als Generator und die somit durch den Generatorbetrieb der elektrischen Maschine entstehende Energie, welche der Generator abgibt, dient zur Abbremsung des Fahrzeugs. In einer besonderen Fahrsituation ist es auch möglich, die elektrische Maschine als eine Art Wirbelstrombremse zu nutzen und somit eine zusätzliche Verzögerung des Fahrzeugs zu erreichen. Vorteilhaft hierbei ist, dass durch dieses Abbremsen kein Verschleiß an den normal üblichen Bremsen erfolgt.

Im Weiteren besteht ein Betriebsmodus bzw. Fahrzeugzustand darin, dass bei Betrieb der elektrischen Maschine als Antrieb bzw. bei Betrieb als Generator die Energie aus einem der Bordspannungsnetze zur Maschine bzw. von der elektrischen Maschine, welche als Generator arbeitet, in die Bordspannungsnetze erfolgt. Hierzu sind im Weiteren Umwandler vorhanden, welche die von der elektrischen Maschine abgegebene Energie auf das Spannungsniveau des jeweiligen Nieder- oder Hochspannungsnetzes transferiert. Als Niederspannungsnetz ist ein 12 Volt-Netz oder 24-Volt-Netz, als Hochspannungsnetz jedes andere Netz, welches über 60 Volt betrieben ist, zu bezeichnen. Im Weiteren besteht über die Wandler die Möglichkeit, die Energien aus den einzelnen Bordnetzen zu übertragen.

Für die Energiespeicherung in Systemen, in denen kurzzeitig hohe elektrische Ströme verlangt werden, kommen in zunehmendem Maße Energiespeicher mit hoher Energiedichte zum Einsatz, um beispielsweise die für den Startvorgang benötigte hohe elektrische Leistung bereitzustellen. Der Energiespeicher umfasst mehrere einzelne Energiespeicherzellen, die in Reihe geschaltet sind, um die notwendige Gesamtspannung zu erreichen. Man hat nun festgestellt, dass es innerhalb solcher Reihenschaltungen von Energiespeicherzellen zu unsymmetrischen Ladungszuständen kommen kann. Damit die Funktionsfähigkeit und die Langlebigkeit des Energiespeichers bzw. der Energiespeicherzellen erhalten bleiben, müssen die einzelnen Zellen auf nahezu gleiches Spannungsniveau innerhalb des Energiespeichers gebracht werden, d. h. die Ladespannungen der einzelnen Zellen werden gelegentlich aneinander angepasst, d. h. symmetriert bzw. ausgeglichen. Würde solch eine Symmetrierung bzw. Ausgleichsladung nicht erfolgen, so könnte es beispielsweise sogar zu negativen Spannungen an einzelnen Energiespeicherzellen kommen, was dazu führen würde, dass diese Zelle zerstört wäre. Weiterhin kann ein solches Auseinanderdriften der Zellen zu Überlastung und Degeneration einzelner Zellen und u. U. sogar zum Sicherheitsrisiko führen.

In vorteilhafter Weise sind Energiespeicher bzw. Energiespeicherzellen Nickel-Metall-Hydrid-Batterien (NiMH) oder Lithium-Ionen-Batterien (Li-Ionen).

Der wohl wichtigste besondere Zustand für den Energiespeicher, insbesondere die NiMH-Batterien oder Li-Ionen-Batterien, ist die Symmetrierung bzw. Ausgleichsladung der Einzelzellen. Dieser Zustand kann, beispielsweise im Fall von NiMH-Batterien periodisch, beispielsweise halbjährlich in Form eines Serviceintervalls, durchgeführt werden.

Erfindungsgemäß wird die Symmetrierung bzw. Ausgleichsladung bei einem Fahrzeugzustand vorgenommen, bei welchem das Fahrzeug entweder sich gleichmäßig mittels Verbrennungsmotor fortbewegt, oder steht, vorzugsweise wenn das Fahrzeug geparkt ist. Insbesondere muss gewährleistet sein, dass über einen längeren Zeitraum keine Entnahme oder Einspeisung von Energie in den Energiespeicher bzw. die Energiespeicherzellen erfolgt.

Dies wird insbesondere dadurch gewährleistet, dass zum einen ein Tempomat als Indikation verwendet wird. Bei Betätigen des Tempomats kann davon ausgegangen werden, dass das Fahrzeug sich über eine längere Zeit mit kontinuierlicher Geschwindigkeit bewegt. Bei Aktivieren des Tempomats wird somit die elektrische Maschine abgeschaltet und außer Betrieb gesetzt. Der Energiespeicher wird dann symmetriert bzw. ausgeglichen. Die Steuereinheit steuert die Symmetrierung bzw. Ausgleichungsladung.

Im Weiteren hat sich insbesondere bei NiMH-Batterien, wie auch Li-Ionen-Batterien die Problematik aufgezeigt, dass mit Absinken der Temperatur, d. h. der Umgebungstemperatur, unter einen Schwellwert, die Fähigkeit der Batterie, Energie abzugeben, sich verringert. Um dies zu vermeiden ist vorgesehen, dass ein spezielles Element, vorzugsweise ein spezieller Heizwiderstand, welcher in der Lage ist, die elektrische Energie nahezu vollständig in Wärme umzusetzen, vorgesehen ist. Dieses spezielle Element wird, wenn ein vorgegebener Temperaturwert für die Umgebungstemperatur unterschritten ist aktiviert, um die Batterie auf einen Mindesttemperaturniveau zu bringen. Dies versetzt dann den Energiespeicher des Fahrzeugs in die Lage, die notwendige Energie, welche im Energiespeicher vorhanden ist, jedoch wegen der geringen Temperaturen nicht abgerufen werden kann, zu verbessern und somit auch die Lebensdauer der Batterie zu verlängern. Es hat sich als vorteilhaft erwiesen, diesen Vorgang zu initiieren, sobald das Fahrzeug aufgeschlossen wird.

## Patentansprüche

1. Antriebssystem für ein Kraftfahrzeug mit einer Verbrennungsmaschine und mindestens einer elektrischen Maschine, wobei im Fahrzeug mindestens ein Bordnetz zur elektrischen Energieversorgung vorhanden ist, sowie mindestens ein Energiespeicher, der mehrere Energiespeicherzellen aufweist, und eine Steuerungsanordnung, die derart ausgebildet ist, dass
- eine Beschleunigung des Kraftfahrzeugs mit Verbrennungsmaschine und/oder elektrischer Maschine,
- eine gleichmäßige Fahrt des Kraftfahrzeugs mit Verbrennungsmaschine und/oder elektrischer Maschine,
- ein Betrieb der elektrischen Maschine als Generator zur Erzeugung von elektrischer Energie (Rekuperieren),
- eine Einspeisung der elektrischen Energie, welche durch die elektrische Maschine erzeugt wird, in mindestens eines der Bordnetze,
- eine Umsetzung der im Bordnetz vorhandenen Spannung auf eine Spannung eines weiteren Bordnetzes, und
- ein Symmetrieren bzw. Ausgleichen der Energiespeicherzellen des Energiespeichers,
als Betriebsmodi steuerbar sind,
**dadurch gekennzeichnet, dass** die Steuerungsanordnung ausgebildet ist, das Symmetrieren bzw. Ausgleichen der Energiespeicherzellen des Energiespeichers abhängig vom Betätigen eines eine gleichmäßige Fahrt des Fahrzeugs anzeigenden Tempomats zu steuern.

2. Antriebssystem für ein Kraftfahrzeug nach einem der Ansprüche 1 bis 3,
**dadurch gekennzeichnet,**
**dass** das Kraftfahrzeug mindestens ein Niederspannungsbordnetz und ein Hochspannungsbordnetz aufweist.

3. Antriebssystem für ein Kraftfahrzeug nach einem der vorhergehenden Ansprüche,
**dadurch gekennzeichnet,**
**dass** die elektrische Maschine parallel zu der Verbrennungsmaschine zuschaltbar ist

4. Antriebssystem für ein Kraftfahrzeug nach einem der vorhergehenden Ansprüche,
**dadurch gekennzeichnet,**
**dass** es sich bei dem Niederspannungsbordnetz um ein 12-Volt-Netz und/oder 24-Volt-Netz und beim Hochspannungsbordnetz um ein Spannungsnetz ausgelegt für Spannungen höher 60 Volt handelt.

5. Antriebssystem für ein Kraftfahrzeug,
**dadurch gekennzeichnet,**
**dass** das Antriebssystem ein Element zum Umsetzen von elektrischer Energie in Wärme beinhaltet.

6. Antriebssystem für ein Kraftfahrzeug,
**dadurch gekennzeichnet,**
**dass** die Energiespeicherzellen Nickel-Metall-Hydrid-Batterien oder Lithium-Ionen-Batterien sind.

7. Verfahren zum Betrieb eines Antriebssystems für ein Kraftfahrzeug mit einer Verbrennungsmaschine und mindestens einer elektrischen Maschine, in einem Fahrzeug mit mindestens einem Bordnetz zur elektrischen Energieversorgung, sowie mindestens einem Energiespeicher, der mehrere Energiespeicherzellen aufweist, und eine Steuerungsanordnung zur Steuerung verschiedener Betriebsmodi des Kraftfahrzeugs, wobei folgende Betriebsmodi des Fahrzeugs vorgesehen sind:
- Beschleunigung des Kraftfahrzeugs mit Verbrennungsmaschine und/oder elektrischer Maschine,
- gleichmäßige Fahrt des Kraftfahrzeugs mit Verbrennungsmaschine und/oder elektrischer Maschine,
- Betrieb der elektrischen Maschine als Generator zur Erzeugung von elektrischer Energie (Rekuperieren),
- Einspeisung der elektrischen Energie, welche durch die elektrische Maschine erzeugt wird, in mindestens eines der Bordnetze,
- Umsetzung der im Bordnetz vorhandenen Spannung auf eine Spannung eines weiteren Bordnetzes, und
- Symmetrieren bzw. Ausgleichen der Energiespeicherzellen des Energiespeichers,
**dadurch gekennzeichnet, dass** die Energiespeicherzellen bei einer durch Betätigen eines Tempomats angezeigten gleichmäßigen Fahrt und/oder beim Parken des Fahrzeugs symmetriert werden.

8. Verfahren nach Anspruch 7,
**dadurch gekennzeichnet,**
**dass** das Kraftfahrzeug mit Verbrennungsmaschine und elektrischer Maschine durch eine Boost-Funktion beschleunigt wird.

9. Verfahren nach Anspruch 7 oder 8,
**dadurch gekennzeichnet, dass**
der Energiespeicher bzw. die Energiespeicherzellen geheizt wird, wenn die Umgebungstemperatur einen vorgegebenen Schwellenwert unterschreitet.

## Claims

1. A drive system for a motor vehicle including an internal combustion engine and at least one electrical machine, wherein the vehicle is provided with at least one onboard network for electric power supply, and at least one energy storage device comprising several energy storage cells, and a control arrangement which is designed in such a manner that
- an acceleration of the motor vehicle including an internal combustion engine and/or electrical machine,
- travel at a constant speed of the motor vehicle including an internal combustion engine and/or electrical machine,
- operation of the electrical machine as a generator to generate electrical energy (recuperation),
- feeding of the electrical energy generated by the electrical machine into at least one of the onboard networks,
- a conversion of the voltage that is present in the onboard network to a voltage of another onboard network, and
- a symmetrization or equalization of the energy storage cells of the energy storage device
can be controlled as modes of operation,
**characterized in that**
the control arrangement is designed to control the symmetrization or equalization of the energy storage cells of the energy storage device depending on the actuation of a cruise control which indicates that the vehicle is travelling at a constant speed.

2. A drive system for a motor vehicle according to any one of claims 1 to 3,
**characterized in that**
the motor vehicle comprises at least one low-voltage onboard network and one high-voltage onboard network.

3. A drive system for a motor vehicle according to any one of the preceding claims,
**characterized in that**
the electrical machine can be switched on in parallel to the internal combustion engine.

4. A drive system for a motor vehicle according to any one of the preceding claims,
**characterized in that**
the low-voltage onboard network is a 12 volt network and/or 24 volt network, and the high-voltage onboard network is a voltage network designed for voltages higher than 60 volts.

5. A drive system for a motor vehicle,
**characterized in that**
the drive system includes an element for converting electrical energy to heat.

6. A drive system for a motor vehicle
**characterized in that**
the energy storage cells are nickel-metal hydride batteries or lithium ion batteries.

7. A method for operating a drive system for a motor vehicle including an internal combustion engine and at least one electrical machine in a vehicle including at least one onboard network for electric power supply, and at least one energy storage device comprising several energy storage cells, and a control arrangement for controlling different modes of operation of the motor vehicle, wherein the following modes of operation of the vehicle are possible:
- acceleration of the motor vehicle including an internal combustion engine and/or electrical machine,
- travel at a constant speed of the motor vehicle including an internal combustion engine and/or electrical machine,
- operation of the electrical machine as a generator to generate electrical energy (recuperation),
- feeding of the electrical energy generated by the electrical machine into at least one of the onboard networks,
- conversion of the voltage that is present in the onboard network to a voltage of another onboard network, and
- symmetrization or equalization of the energy storage
cells of the energy storage device
**characterized in that**
the energy storage cells are symmetrized during travel at a constant speed indicated by actuating a cruise control and/or during parking of the vehicle.

8. A method according to claim 7,
**characterized in that**
the motor vehicle including an internal combustion engine and an electrical machine is accelerated by means of a boost function.

9. A method according to claim 7 or 8,
**characterized in that**
the energy storage device or the energy storage cells is/are heated when the ambient temperature is below a predefined threshold.

## Revendications

1. Système d'entraînement pour un véhicule automobile avec un moteur à combustion et au moins un moteur électrique, au moins un réseau de bord étant présent dans le véhicule pour l'alimentation en énergie électrique, ainsi qu'au moins un accumulateur d'énergie qui présente plusieurs cellules d'accumulateur d'énergie, et un dispositif de commande qui est constitué de sorte que
- une accélération du véhicule automobile avec moteur à combustion et/ou moteur électrique,
- une marche régulière du véhicule automobile avec moteur à combustion et/ou moteur électrique,
- un fonctionnement du moteur électrique en tant que générateur pour la production d'énergie électrique (récupération),
- une introduction dans au moins un des réseaux de bord de l'énergie électrique qui est produite par le moteur électrique,
- une transposition de la tension présente dans le réseau de bord vers une tension d'un autre réseau de bord,
- une symétrisation ou un équilibrage des cellules d'accumulateur d'énergie de l'accumulateur d'énergie,
peuvent être commandés en tant que modes de fonctionnement,
**caractérisé en ce que**
le dispositif de commande est constitué pour commander la symétrisation ou l'équilibrage des cellules d'accumulateur d'énergie de l'accumulateur d'énergie en fonction de l'actionnement d'un régulateur de vitesse affichant une marche régulière du véhicule.

2. Système d'entraînement pour un véhicule automobile selon une des revendications 1 à 3,
**caractérisé en ce que**
le véhicule automobile possède au moins un réseau de bord basse tension et un réseau de bord haute tension.

3. Système d'entraînement pour un véhicule automobile selon une des revendications précédentes,
**caractérisé en ce que**
le moteur électrique peut être monté en parallèle avec le moteur à combustion.

4. Système d'entraînement pour un véhicule automobile selon une des revendications précédentes,
**caractérisé en ce que**,
concernant le réseau de bord basse tension, il s'agit d'un réseau de 12 volts et/ou d'un réseau de 24 volts et, concernant le réseau de bord haute tension, il s'agit d'un réseau de tension conçu pour des tensions supérieures à 60 volts.

5. Système d'entraînement pour un véhicule automobile,
**caractérisé en ce que**
le système d'entraînement contient un élément pour la conversion d'énergie électrique en chaleur.

6. Système d'entraînement pour un véhicule automobile,
**caractérisé en ce que**
les cellules d'accumulateur d'énergie sont des batteries nickel-hydrure métallique ou des batteries lithium-ion.

7. Procédé de fonctionnement d'un système d'entraînement pour un véhicule automobile avec un moteur à combustion et au moins un moteur électrique, dans un véhicule avec au moins un réseau de bord pour l'alimentation en énergie électrique, ainsi qu'au moins un accumulateur d'énergie qui présente plusieurs cellules d'accumulateur d'énergie, et un dispositif de commande pour la commande de différents modes de fonctionnement du véhicule automobile, les modes de fonctionnement suivants du véhicule étant prévus :
- accélération du véhicule automobile avec moteur à combustion et/ou moteur électrique,
- marche régulière du véhicule automobile avec moteur à combustion et/ou moteur électrique,
- fonctionnement du moteur électrique en tant que générateur pour la production d'énergie électrique (récupération),
- introduction dans au moins un des réseaux de bord de l'énergie électrique qui est produite par le moteur électrique,
- transposition de la tension présente dans le réseau de bord vers une tension d'un autre réseau de bord,
- symétrisation ou équilibrage des cellules d'accumulateur d'énergie de l'accumulateur d'énergie,
**caractérisé en ce que**
les cellules d'accumulateur d'énergie sont symétrisées en cas de marche régulières affichée par l'actionnement d'un régulateur de vitesse et/ou en cas de stationnement du véhicule.

8. Procédé selon la revendication 7,
**caractérisé en ce que**
le véhicule automobile avec moteur à combustion et moteur électrique est accéléré par une fonction d'appoint.

9. Procédé selon la revendication 7 ou 8,
**caractérisé en ce que**
l'accumulateur d'énergie ou les cellules d'accumulateur d'énergie sont chauffé(e)s quand la température ambiante passe sous une valeur de seuil prédéfinie.
